# EUROPEAN PATENT SPECIFICATION

(11) **EP 2 939 535 B1**
(45) Date of publication and mention of the grant of the patent: **02.05.2018**
(21) Application number: 15157460.5
(22) Date of filing: 03.03.2015
(51) Int. Cl.: A01K 89/01

(54) **Fishing spinning reel**
Angelrolle
Moulinet de pêche

(30) Priority: 28.04.2014 JP 2014092698
(43) Date of publication of application: 04.11.2015
(73) Proprietor: Globeride, Inc., Tokyo 203-8511 (JP)
(72) Inventor: Matsuda, Kazuyuki, Tokyo 203-8511 (JP)
(74) Representative: Boult Wade Tennant

(56) References cited:
- JP-A- 2004 081 193
- JP-A- 2006 087 357
- JP-U- S57 125 269
- US-A- 4 466 580
- US-A- 4 601 437
- US-A- 6 045 077
- US-B1- 6 286 772

## Description

### TECHNICAL FIELD

The present invention relates to a fishing spinning reel.

### BACKGROUND

Typically, a fishing spinning reel includes a rotor rotatably disposed in front of the reel body, and a spool provided so as to be movable back and forth in synchronization with the rotation of the rotor and configured to hold a fishing line wound therearound via the rotor. The spool is rotatably mounted on a spool shaft via a bearing such as a ball bearing and a tubular retainer.

One example of method of fixing a retainer on a spool shaft is used for the fishing spinning reel disclosed in Patent Literature 1. In Patent Literature 1, a threaded hole is formed through the body of the retainer, and an internal thread corresponding to the threaded hole is formed in the spool shaft. A hexagon socket setscrew is screwed through the threaded hole in the retainer into the internal thread in the spool shaft to fix the retainer on the spool shaft so as to be axially immovable and circumferentially unrotatable. Other fishing spinning reels are known from documents US 6 045 077 A, US 6 286 772 B1, US 4 601 437 A and US 4 466 580 A.

### RELEVANT REFERENCES

### LIST OF RELEVANT PATENT LITERATURE

Patent Literature 1: Japanese Patent Application Publication No. 2011-147396

### SUMMARY

The fishing spinning reel of Patent Literature 1 suffers from a problem that production cost is high due to the need of screw processing on the retainer and the spool shaft. Another problem is that it is difficult to have a large space for disposing the setscrews in the direction orthogonal to the axial direction of the spool shaft because the spool is disposed around the retainer. Thus, the setscrew may be weakly bound to the spool shaft and thus may be loosened. Such loosening of the setscrew may cause loosening of the retainer; and when the spool is removed from the spool shaft, the retainer may also be removed along and lost.

The present invention is intended to overcome the above problem, and one object thereof is to provide a low-cost fishing spinning reel wherein a retainer can be securely fixed without looseness so as not to fall off.

To the above end, the fishing spinning reel of the present invention according to claim 1 comprises: a reel body; a spool shaft provided on the reel body so as to be reciprocatable; a retainer through which the spool shaft is inserted and which is configured to support a spool; a locking portion configured to lock the retainer on the spool shaft; and a fastener screwed on the spool shaft and configured to press the retainer against the locking portion.

In this fishing spinning reel, the fastener is screwed and squeezed on the spool shaft so as to contact the retainer and press the retainer against the locking portion .

The present invention is also characterized in that the retainer comprises a base locked on the spool shaft by the locking portion, and a tube extending from the base and surrounding the spool shaft, and the fastener is configured to advance into the tube by screwing and press the base so as to squeeze the retainer in an axial direction.

In the fishing spinning reel, the fastener can be advanced into the tube of the retainer and squeezed in the tube.

Further, the present invention is also characterized in that the fastener is screwed into an end of the spool shaft so as to press the retainer against the locking portion.

In this fishing spinning reel, the fastener is screwed and squeezed into the end of the spool shaft so as to contact the retainer and press the retainer against the locking portion .

### ADVANTAGES

In the present invention, the fastener is screwed and squeezed on the spool shaft so as to contact the retainer and press the retainer against the locking portion; therefore, the retainer can be securely nipped between the locking portion and the fastener. Thus, the retainer can be securely fixed on the spool shaft without looseness.

Since the retainer is securely nipped between the locking portion and the fastener, the retainer can be adequately prevented from falling off the spool shaft.

Since the retainer can be fixed by squeezing of the fastener, there is no need of complex screw processing unlike in the related art where the retainer is squeezed with a setscrew.

Further, since the fastener is advanced into the tube of the retainer such that the fastener is squeezed in the tube, the fastener may not be exposed externally and less prone to be loosened. Accordingly, the retainer can be fixed without looseness for a long period.

In the arrangement where the fastener is screwed and squeezed into the end of the spool shaft so as to contact the retainer and press the retainer against the locking portion, the simple structure where the fastener is screwed into the end of the spool shaft enables the retainer to be fixed on the spool shaft without looseness. Since the end of the spool shaft is positioned in the retainer, the axial length of the spool shaft can be small. Accordingly, the cost can be reduced.

### BRIEF DESCRIPTION OF THE DRAWINGS

Fig. 1 shows the entirety of the fishing spinning reel according to a first embodiment of the present invention.
Fig. 2 is an enlarged view showing a retainer and a spool, and the structure where these members are fixed.
Fig. 3a is a sectional view of the retainer before screwing of a fastener; Fig. 3b is a perspective view of the fastener; and Fig. 3c is a sectional view of the retainer after screwing of the fastener.
Fig. 4 is an enlarged sectional view showing the retainer and the spool, and the structure where these members are fixed in the fishing spinning reel according to a non-claimed embodiment of the present invention.
Fig. 5a is a sectional view of the retainer before screwing of a fastener; Fig. 5b is a perspective view of the fastener; and Fig. 5c is a sectional view of the retainer after screwing of the fastener.
Figs. 6a to 6c show the retainer and the spool, and the structure where these members are fixed in the fishing spinning reel according to a non-claimed embodiment of the present invention, wherein Fig. 6a is an enlarged sectional view of a main part, Fig. 6b is a front view of the main part as viewed from the axial direction, and Fig. 6c is a partially sectioned perspective view of the main part.

### DESCRIPTION OF EXAMPLE EMBODIMENTS

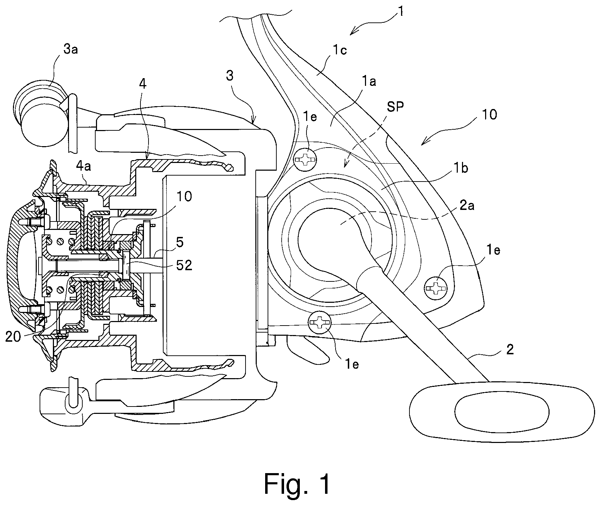

Embodiments of a fishing spinning reel according to the present disclosure will be now described with reference to the drawings. Across the embodiments, the same elements are denoted with the same numeral; and duplicate description will be omitted. In the following description, the directions referred to as "front and rear (back and forth)" and "top and bottom" are based on those shown in Fig. 1.

As shown in Fig. 1, the fishing spinning reel mainly includes a reel body 1 having a leg 1c provided thereon and extending upward, a rotor 3 rotatably disposed in front of the reel body 1, and a spool 4 provided so as to be movable back and forth in synchronization with the rotation of the rotor 3.

The reel body 1 may be rigidly formed of a lightweight material, for example, metals such as aluminum alloys, titanium alloys, or magnesium alloys, high strength resins such as ABS resin or PA resin, or fiber reinforced resins such as carbon fiber reinforced plastics (CFRP) or glass fiber reinforced plastic (GFRP). The reel body 1 may be provided as necessary with a decoration layer on the surface thereof for improving the appearance. The reel body 1 may include a reel body 1a having an internal space SP openable at one side thereof and a cover body 1b closing the internal space SP.

The cover body 1b may be accurately positioned via an appropriate positioning member disposed at an open end of the reel body 1a. The cover body 1b may be fixed on the reel body 1a by fastening with three screws 1e. Both the reel body 1a and the cover body 1b may be provided with bearing members (not shown) which rotatably support the handle shaft 2a. A handle 2 may be mounted on a projecting end of the handle shaft 2a.

A drive gear (not shown) formed integrally with the handle shaft 2a may be disposed in the internal space SP. The drive gear may rotationally drive the rotor 3 via a pinion gear of a wind drive device (not shown). In synchronization, a spool reciprocating device in the internal space SP may be driven to reciprocate the spool shaft 5. The spool shaft 5 may be guided by the support members (not shown) which are integrally formed on the reel body 1a and placed in the internal space SP, while moving back and forth together with a spool 4 disposed on the end thereof. Smooth movements of these members are ensured by the reel body 1a and the cover body 1b having rigid structure.

In such a fishing spinning reel, the handle 2 may be rotated such that the handle shaft 2a may be rotated, the spool 4 may be reciprocated back and forth via the spool reciprocation device, and the rotor 3 may be rotationally driven via the wind drive device. Thus, a fishing line may be evenly wound around the line-winding shell 4a of the spool 4 via the line guide 3a. The handle 2 may be removed from the left-side position shown in the figure to the opposite side as necessary.

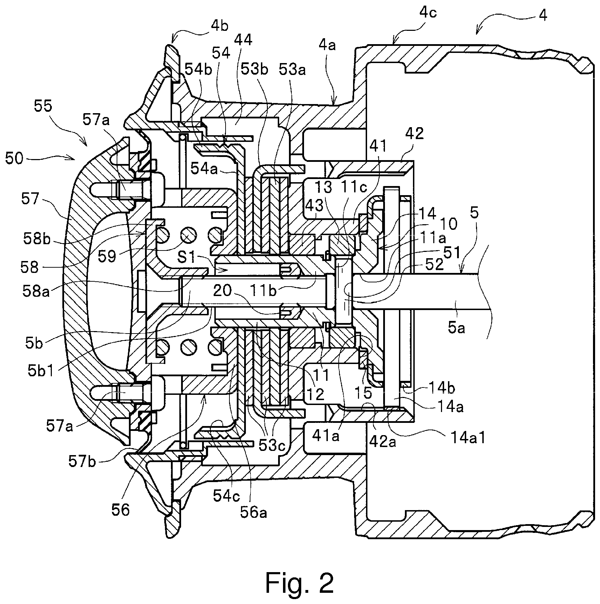

As shown in Fig. 2, the spool 4 is mounted on the spool shaft 5 via the retainer 10. The spool shaft 5 includes a large diameter portion 5a, and a small diameter portion 5b continuous to the front end of the large diameter portion 5a. In the embodiment, the retainer 10 may be mounted on a region ranging from the large diameter portion 5a to the small diameter portion 5b. In the front end of the large diameter portion 5a may be formed a through hole 51 extending in the direction orthogonal to the axial direction. A locking pin 52 for locking the retainer 10 may be inserted into the through hole 51. In the outer surface of the small diameter portion 5b may be formed an external thread 5b1.

The retainer 10 has a tubular shape for insertion of the spool shaft 5 and includes a base 11 and a tube 12. The retainer 10 of the embodiment may have a flat oval section (not shown) with an outer circumference constituted by linear portions and curved portions. The base 11 may include a large diameter inner circumferential portion 11a mounted on the large diameter portion 5a of the spool shaft 5, and a small diameter inner circumferential portion 11b having a smaller diameter than the large diameter inner circumferential portion 11a.

The large diameter inner circumferential portion 11a may have an inner diameter for fitting around the large diameter portion 5a of the spool shaft 5. The large diameter inner circumferential portion 11a may have a through hole 11c formed therein into which the locking pin 52 is inserted. The through hole 11c may communicate with the through hole 51 in the spool shaft 5. The small diameter inner circumferential portion 11b may have an inner diameter for insertion of the small diameter portion 5b of the spool shaft.

The "locking portion" recited in the claims corresponds to the through hole 51, the though hole 11c, and the locking pin 52 for locking the retainer 10 on the spool shaft 5 in the embodiment. With the locking portion, the retainer 10 is mounted on the spool shaft 5 so as to be axially immovable and circumferentially unrotatable.

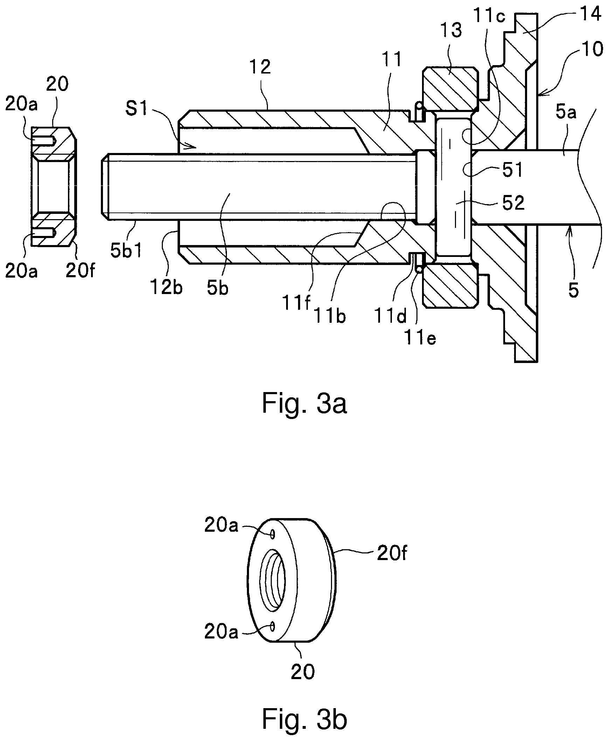

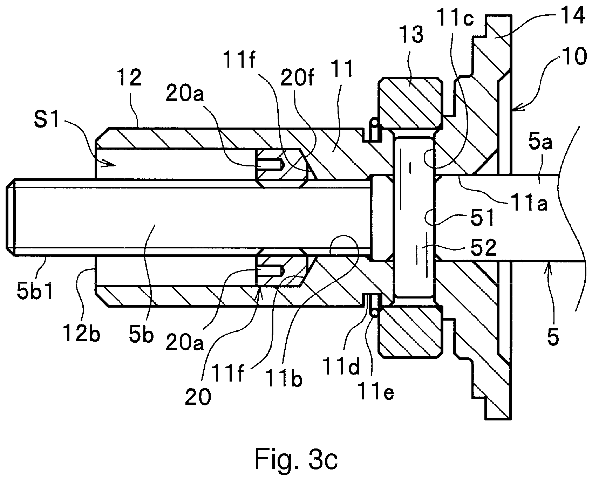

On the outer surface of the base 11 may be mounted a bearing 13 having a ring shape so as to block the through hole 11c. As shown in Figs. 3a and 3c, the bearing 13 may be retained so as not to come off, by a retaining ring 11e fitted in a circumferential groove 11d around the base 11. As shown in Fig. 2, the bearing 13 may be inserted inside a support portion 41 of the spool 4 to support the support portion 41.

In the rear portion of the base 11 may be integrally formed a brim 14 having a step. On the rear portion of the brim 14 may be mounted an annular wall 14b supporting a click spring 14a. The end 14a1 of the click spring 14a may be engaged with a tooth portion 42a formed in the inner surface of an inner tube 42 of the spool 4. The front portion of the brim 14 may contact the rear end 41a of the support portion 41 of the spool 4 via a spacer 15.

The tube 12 may be formed integrally with the front portion of the base 11. The tube 12 extends forward along the small diameter portion 5b of the spool shaft 5 to from a gap S1 between the tube 12 and the small diameter portion 5b and surround the substantial central portion of the small diameter portion 5b. As shown in Fig. 3c, a nut 20 serving as a fastener is squeezed into the tube 12 so as to contact a tapered front end surface 11f of the base 11.

As shown in Fig. 2, the tube 12 may be fitted into a stationary braking plate 53a, rotational braking plate 53b, a lining member 53c, a ratchet ring 54, and a pressing plate 56a of a drag force adjusting member 55; and these members are included in a drag device 50.

The nut 20 can be screwed on the small diameter portion 5b of the spool shaft 5. As shown in Fig. 3b, the nut 20 may have a cylindrical shape and is advanced, by screwing, into the tube 12 (into the gap S1) through the opening 12b of the tube 12. The rear end surface 20f of the nut 20 may be tapered so as to conform to the front end surface 11f of the base 11. In the front portion of the nut 20 may be formed mounting holes 20a for mounting a jig for squeezing. The nut 20 may be squeezed by the jig and contacted with the front end surface 11f of the base 11 of the retainer 10 so as to press the retainer 10 against the locking portion (the locking pin 52). Thus, the retainer 10 is squeezed in the axial direction and nipped between the locking portion and the nut 20, and thus the retainer 10 is securely fixed on the spool shaft 5.

The spool 4 may have a tubular shape including a line-winding shell 4a for winding a fishing line, a front flange 4b disposed on the front end side of the line-winding shell 4a, and a skirt 4c disposed on the rear end side. Inside the line-winding shell 4a may be integrally formed a cylindrical support portion 41. Inside the front portion of the support portion 41 may be mounted a bearing 43. The support portion 41 may be rotatably supported around the axis of the retainer 10 via the bearing 43 and the bearing 10 mounted on the retainer 10. In front of the support portion 41 may be provided an open recess 44 which is open forwardly. A drag device 50 may be disposed in the open recess 44.

The drag device 50 may include a stationary braking plate 53a, rotational braking plate 53b, a lining member 53c, a ratchet ring 54, and a drag force adjusting member 55. The stationary braking plate 53a may be unrotatably fitted on the non-circular outer circumference (having a flat oval section) of the retainer 10. The rotational braking plate 53b may have an outer circumference unrotatably fitted on the inner surface of the spool 40. It is also possible that the drag device 50 includes two or more stationary braking plates 53a and two or more rotational braking plates 53b. The lining member 53c may be disposed on frictional engagement surfaces of the stationary braking plate 53a and the rotational braking plate 53b.

The relative rotation between the tube 12 of the retainer 10 and the stationary braking plate53a may be prohibited by forming a mounting hole in the central portion of the stationary braking plate 53a so as to have a non-circular shape (having a flat oval section) conforming to the non-circular shape (having a flat oval section) of the outer circumferential surface of the tube 12, and by fitting the outer circumferential surface of the tube 12 into the non-circular mounting hole of the stationary braking plate 53a.

The ratchet ring 54 may constitute a click device. The ratchet ring 54 may have a disk shape and include a nipped portion 54a and a ring portion 54b integrated together. The nipped portion 54a may be disposed between the pressing plate 56a and the lining member 53c of the drag force adjusting member 55. The ring portion 54b may extend forward from an edge of the nipped portion 54a and may be disposed outside an outer circumferential cylinder 55b of the drag force adjusting member 55. On the inner circumferential surface of the ring portion 54b may be arranged in parallel a large number of uneven click teeth 54c engaged with a projection of a click engagement portion (not shown). Thus, the uneven click teeth 54c engaged with and moving relatively to the projection of the click engagement portion may generate click sound.

The drag force adjusting member 55 may be mounted on the end of the small diameter portion 5b of the spool shaft 5 by screwing. The drag force adjusting member 55 may include a ratchet ring 54, a pressing member 56 for pressing the stationary braking plate 53a and the rotational braking plate 53b, a drag knob 57 for adjusting the pressing force of the pressing member 56, a nut member 58 screwed on the external thread 5b1 of the small diameter portion 5b of the spool shaft 5, and a compressed coil spring (elastic member) 59.

The pressing member 56 may include the pressing plate 56a disposed on the outer circumference of the end of the tube 12 of the retainer 10. The compressed coil spring 59 may be interposed between the pressing plate 56a and the nut member 58. The pressing plate 56a may press the ratchet ring 54, the stationary braking plate 53a, and the rotational braking plate 53b by the biasing force of the compressed coil spring 59.

The front end of the pressing member 56 may be mounted on the rear portion of the drag knob 57 via the screws 57a, 57a. On the outer circumference of the drag knob 57 may be disposed a seal member 57b for keeping the watertightness with the inner circumferential surface of the front flange 4b of the spool 4.

The nut member 58 may be housed inside the pressing member 56 and fitted on the rear portion of the drag knob 57 so as to be unrotatable but movable in the axial direction. The nut member 58 may include an internal thread 58a screwed on the external thread 5b1 of the small diameter portion 5b of the spool shaft 5, and a recess 58b supporting the front end of the compressed coil spring 59. Thus, when the drag knob 57 is rotated in the direction of squeezing against the spool shaft 5, the internal thread 58a of the nut member 58 unrotatably fixed on the drag knob 57 may be screwed on the external thread 5b1 of the small diameter portion 5b of the spool shaft 5.

In such a drag device 50, the drag force adjusting member 55 may serve as an adjuster for adjusting the frictional binding force between the stationary braking plate 53a and the rotational braking plate 53b. The pressing force (drag force) may be generated by the biasing force of the compressed coil spring 59 disposed between the pressing member 56 and the drag knob 57; and the pressing force can be adjusted by the drag knob 57. That is, when the drag knob 57 is screwed into the spool shaft 5 (the small diameter portion 5b), the compressed coil spring 59 may generate pressing force in accordance with the distance for which the external thread 5b1 is screwed into the internal thread 58a of the nut member 58. Due to the generated pressing force, the stationary braking plate 53a and the rotational braking plate 53b may be pressed by the support portion 41 of the spool 4 via the lining member 53c of the rear end such that the rotation of the spool 4 relative to the spool shaft 5 may be restricted.

As described above, the pressing force of the compressed coil spring 59 may act on the support portion 41 of the spool 4; therefore, the drag force may not act directly on the retainer 10. Thus, the retainer 10 may be fixed adequately by squeezing of the nut 20.

In the fishing spinning reel of the embodiment as described above, the nut 20 may be screwed and squeezed on the spool shaft 5 (the small diameter portion 5b), the nut 20 may contact the front end surface 11f of the base 11 of the retainer 10 and press the retainer 10 against the locking portion (against the locking pin 52). Therefore, the retainer 10 may be securely nipped between the locking portion (locking pin 52) and the nut 20. Thus, the retainer 10 can be fixed on the spool shaft 5 without looseness.

Further, the retainer 10 may be securely nipped between the locking portion (locking pin 52) and the nut 20, and the retainer 10 may be fixed with the nut 20 squeezed from the end of the spool shaft 5; therefore, the retainer 10 can be adequately prevented from falling off from the spool shaft 5.

Since the retainer 10 can be fixed by squeezing of the nut 20, there is no need of complex screw processing unlike in the related art where the retainer 10 is squeezed with a setscrew.

Further, since the nut 20 is advanced into the tube 12 of the retainer 10 such that the nut 20 is squeezed in the tube 12, the nut 20 may not be exposed externally and less prone to be loosened. Accordingly, the retainer 10 can be fixed without looseness for a long period.

### Second, Non-claimed Embodiment

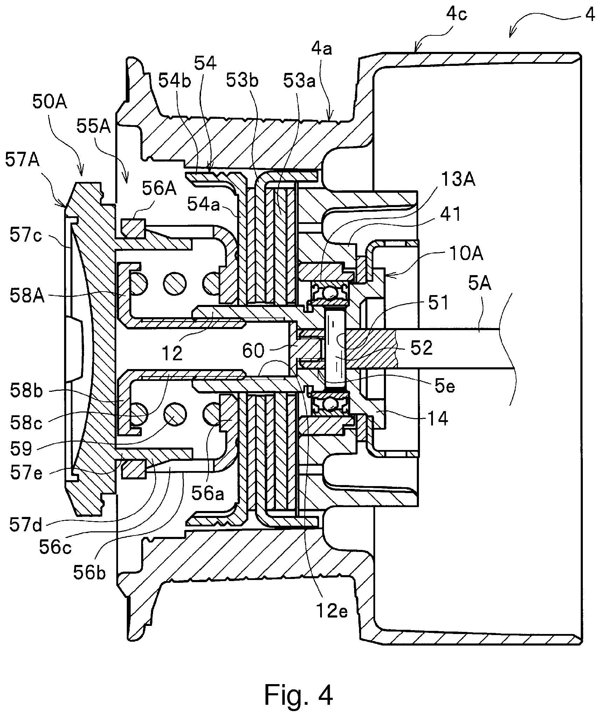

Next, a second, non-claimed embodiment of the fishing spinning reel will now be described with reference to Fig. 4. This embodiment is different from the first embodiment in that a screw 60 serving as a fastener may be screwed and squeezed into the end 5e of the spool shaft 5A such that the screw 60 may contact the retainer 10A and press the retainer 10A against the locking portion (locking pin 52).

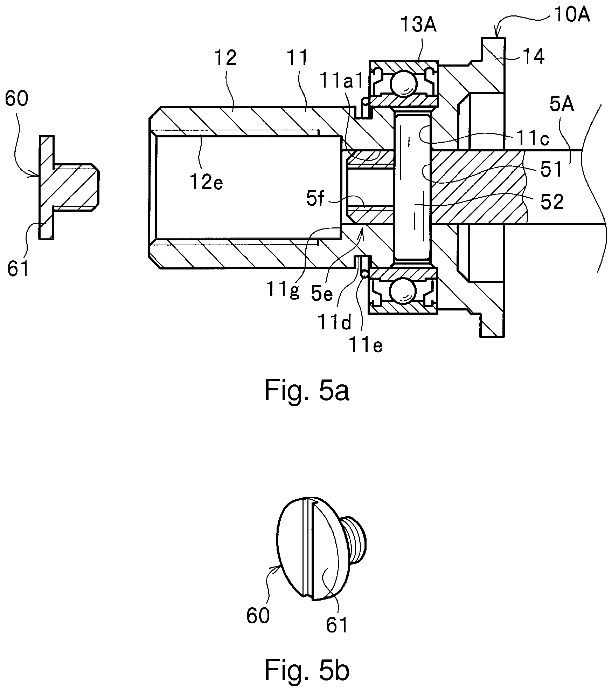

The spool shaft 5A may be positioned such that the end 5e thereof is within the support portion 41 of the spool 4; and the entire length of the spool shaft 5A may be smaller than that of the spool shaft 5 in the first embodiment. In the end 5e may be formed an internal thread 5f (see Fig. 5a) in the axial direction. The through hole 51 may be formed near the end 5e.

The retainer 10A may have a substantially flat oval section (not shown) with an outer circumference constituted by two linear portions and two curved portions. As shown in Fig. 5a, the base 11 may have an inner circumferential portion 11a1 fitted around the outer surface of the end 5e of the spool shaft 5A On the outer surface of the base 11 may be mounted a bearing 13A constituted by a ball bearing so as to block the through hole 11c.

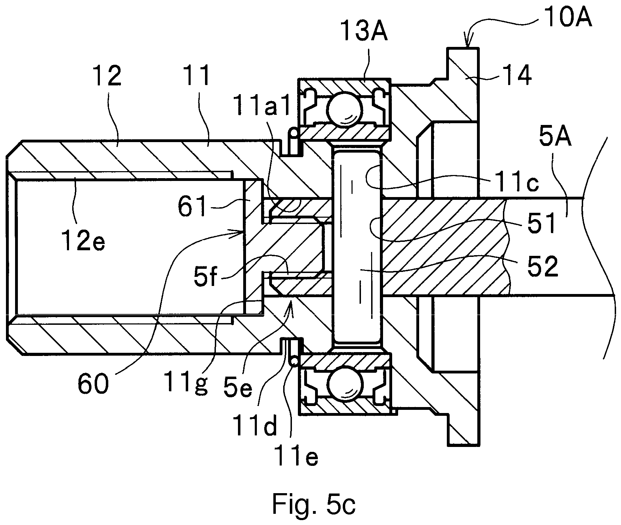

The tube 12 is generally the same as in the first embodiment but different in having an internal thread 12e in the inner surface thereof. As shown in Fig. 4, the external thread 58c of the engagement member 58A of the drag device 50A may be screwed on the internal thread 12e. As shown in Fig. 5c, a screw 60 serving as a fastener may be squeezed into the tube 12 so as to contact a planar front end surface 11g of the base 11.

The screw 60 can be screwed into the internal thread 5f of the spool shaft 5A. As shown in Fig. 5b, the screw 60 may be a flat head screw having a flat head 51 that can be inserted into the tube 12. In squeezing, the head 61 may contact the front end surface 11g of the base 11 and press the retainer 10A against the locking portion (locking pin 52). Thus, the retainer 10A may be squeezed in the axial direction and nipped between the locking portion and the screw 60, and thus the retainer 10A may be fixed.

As shown in Fig. 4, the drag device 50A include the drag force adjusting member 55A screwed into the tube 12 of the retainer 10A. The drag force adjusting member 55A may include a ratchet ring 54, a pressing member 56A for pressing the stationary braking plate 53a and the rotational braking plate 53b, a drag knob 57A for adjusting the pressing force of the pressing member 56A, an engagement member 58A (a nut member) having an external thread 58c screwed into the internal thread 12e of the tube 12, and a compressed coil spring (elastic member) 59.

The pressing member 56A may include a pressing plate 56a, and a cylinder 56b continuous to the pressing plate 56a. The cylinder 56b may have a plurality of side holes 56c formed therein.

The drag knob 57A may include a cap 57c and a tubular portion 57e disposed on the rear portion of the cap 57c and having a plurality of pawls 57d. The pawls 57d may be engaged with the side holes 56c of the cylinder 56b of the pressing member 56A.

The engagement member 58A may be housed inside the pressing member 56A and fitted on the rear portion of the drag knob 57A so as to be unrotatable but movable in the axial direction. The engagement member 58A may include an external thread 58c screwed into the internal thread 12e of the tube 12 of the retainer 10A, and a recess 58b supporting the front end of the compressed coil spring 59. Thus, when the drag knob 57A is rotated relative to the tube 12 of the retainer 10A, the external thread 58c of the engagement portion 58A unrotatably fixed on the drag knob 57A may be screwed into the internal thread 12e of the tube 12.

In the fishing spinning reel of the embodiment, a screw 60 may be screwed and squeezed into the end 5e of the spool shaft 5A such that the screw 60 (the head 61) may contact the retainer 10A (the front end surface 11g of the base 11) and press the retainer 10A against the locking portion (locking pin 52). Thus, the retainer 10A can be fixed on the spool shaft 5A without looseness. Further, since the screw 60 is screwed and squeezed into the end 5e of the spool shaft 5A, the end 5e of the spool shaft 5A can be positioned within the retainer 10A, and thus the axial length of the spool shaft 5A can be small. Therefore, reduction in weight and size is possible.

### Third, Non-claimed Embodiment

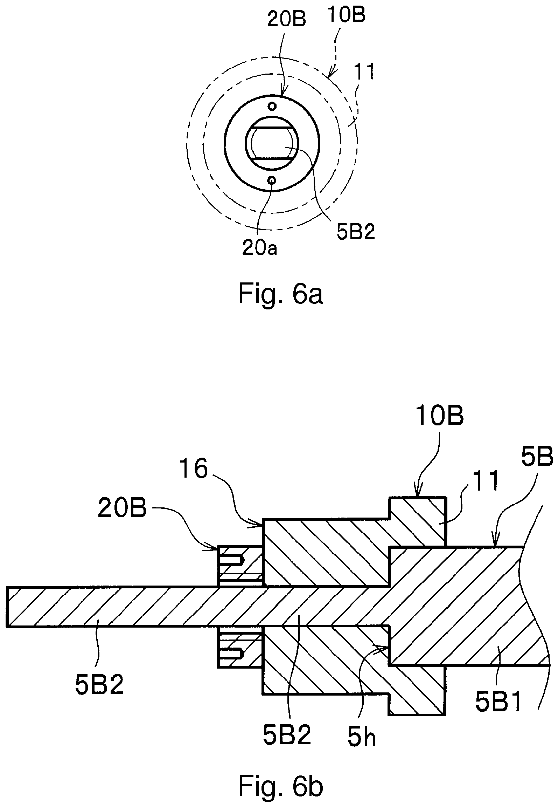

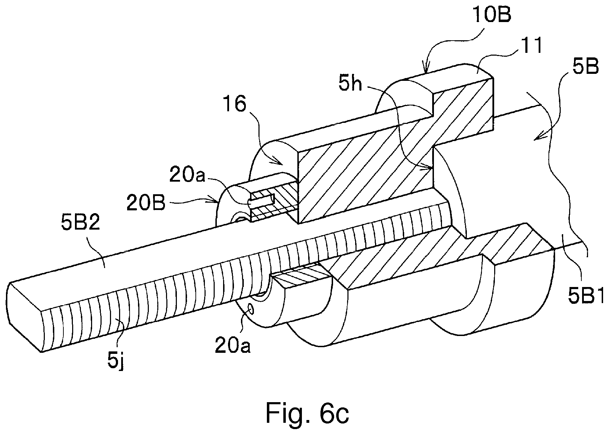

Next, the third, non-claimed embodiment of the fishing spinning reel will now be described with reference to Fig. 6. This embodiment is different from the first and second embodiments in that a nut 20B serving as a fastener may be screwed so as to be contacted with the front end 16 of the retainer 10B such that the nut 20B may press the retainer 10B against the step 5h (the locking pin 52 disposed in the base 11 for prohibition of rotation and positioning) for prohibition of rotation and positioning.

The retainer 10B may be fitted around the spool shaft 5B on a region ranging from the large diameter portion 5B1 to the small diameter portion 5B2 and including the step 5h, and may be unrotatably locked by the small diameter portion 5B2 having a non-circular shape and positioned at the step 5h so as to be locked on the spool shaft 5B. The base 11 of the retainer 10B may be circularly fitted around the large diameter portion 5B1 of the spool shaft 5B having a circular section.

As shown in Figs. 6a and 6c, the small diameter portion 5B2 of the spool shaft 5B may have a substantially flat oval section. In the outer surface of the small diameter portion 5B2 may be formed an external thread 5j (see Fig. 6c).

The nut 20B can be screwed on the small diameter portion 5B2 of the spool shaft 5B. The nut 20B may have a cylindrical shape and may be squeezed by a jig to contact the front end 16 of the retainer 10B and press the retainer 10B against the step 5h constituting the locking portion (see Figs. 6b and 6c). Thus, the retainer 10B may be squeezed in the axial direction and nipped between the step 5h and the nut 20B, and thus the retainer 10B may be fixed.

Additionally, the small diameter portion 5B2 of the spool shaft 5B is not limited to the substantially flat oval shape but may have a desired non-circular shape for unrotatable locking.

In the embodiment, the nut 20B may be screwed and squeezed on the small diameter portion 5B2 of the spool shaft 5B, the nut 20B may contact the retainer 10B and press the retainer 10B against the step 5h. Therefore, the retainer 10B may be securely nipped between the step 5h and the nut 20B. Thus, the retainer 10B can be fixed on the spool shaft 5B without looseness.

Further, since the nut 20B presses the front end 16 of the retainer 10B, the retainer 10B can have a simpler shape than the retainers 10, 10A in the first and second embodiments. Accordingly, the cost can be reduced.

Additionally, on the outer circumference of the non-circular small diameter portion 5B2 of the spool shaft 5B may be fitted various braking plates (not shown) constituting a drag device so as to be rotatable or unrotatable. The retainer 10B may be fixed on the spool shaft 5B and rotatably support the spool 4; various braking plates and a lining member may be fitted around the non-circular small diameter portion 5B2 of the spool shaft 5B having the external thread 5j formed in the end thereof; and the braking force on the spool may be adjusted in accordance with the advancement of the screwed nut member in the drag knob of the drag device.

Embodiments of the present invention are not limited to the above descriptions and are susceptible to various modifications within the scope of the appended claims. For example, the retainers 10, 10A, and 10B may have desired shapes as long as it can be pressed by a fastener such as the nut 20 against the locking portion.

Further, the fastener such as the nut 20 may include two fasteners placed together. Such arrangement may enable the retainer 10 to be more securely fixed on the spool shaft 5 without looseness.

### LIST OF REFERENCE NUMBERS

1 reel body
4 spool
5, 5A, 5B spool shafts
5e end
10, 10A, 10B retainers
11 base
11c through hole (locking portion)
12 tube
20, 20B nut (fastener)
51 through hole (locking portion)
52 locking pin (locking portion)
60 screw (fastener)

## Claims

1. A fishing spinning reel comprising:
a reel body (1, 1a);
a spool shaft (5) provided on the reel body (1) so as to be reciprocatable;
a retainer (10) through which the spool shaft (5) is inserted and which is configured to support a spool (4), the retainer (10) being mounted on the spool shaft (5) so as to be axially immovable and circumferentially unrotatable;
a locking portion (11c, 51, 52) configured to lock the retainer (10) on the spool shaft (5); and
a fastener (20) screwed on the spool shaft (5), the fastener (20) being configured to contact with the retainer (10) and press the retainer (10) against the locking portion (11c, 51, 52),
wherein the retainer (10) comprises a base (11) locked on the spool shaft (5) by the locking portion (11c, 51, 52), and a tube (12) extending from the base (11) and surrounding the spool shaft (5), and
the fastener (20) is configured to advance into the tube (12) by screwing and press the base (11) so as to squeeze the retainer (10) in an axial direction, **characterized in that** the tube (12) extends along a small diameter portion (5b) of the spool shaft (5) to form a gap (S1) between the tube (12) and the small diameter portion (5b), and the fastener (20) is screwed on the small diameter portion (5b) of the spool shaft (5) and is squeezed into the gap (S1) between the tube (12) and the small diameter portion (5b).

2. The fishing spinning reel of claim 1 wherein the fastener (20) is screwed into an end of the spool shaft (5) so as to press the retainer (10) against the locking portion (11c, 51, 52).

## Patentansprüche

1. Angelrolle, welche aufweist:
einen Rollenkörper (1, 1a);
eine Spulwelle (5), die an dem Rollenkörper (1) hin und her bewegbar vorgesehen ist;
einen Halter (10), den die Spulwelle (5) durchsetzt und der konfiguriert ist, um eine Spule (4) zu tragen, wobei der Halter (10) an der Spulwelle (5) so angebracht ist, dass er axial unbeweglich und umfangsmäßig nicht drehbar ist;
einen Arretierabschnitt (11c, 51, 52) der konfiguriert ist, um den Halter (10) auf der Spulwelle (5) zu arretieren; und
einen Befestiger (20), der auf die Spulwelle (5) geschraubt ist, wobei der Befestiger (20) konfiguriert ist, um mit dem Halter (10) in Kontakt zu treten und den Halter (10) gegen den Arretierabschnitt (11c, 51, 52) zu drücken,
wobei der Halter (10) eine Basis (11), die durch den Arretierabschnitt (11c, 51, 52) auf der Spulwelle (5) arretiert ist, sowie ein Rohr (12), das sich von der Basis (11) erstreckt und die Spulwelle (5) umgibt, aufweist, und
der Befestiger (20) konfiguriert ist, um durch Schrauben und Drücken der Basis (11) in das Rohr (12) verlagert zu werden, um den Halter (10) in axialer Richtung zu quetschen,
**dadurch gekennzeichnet, dass**
sich das Rohr (12) entlang einem im Durchmesser kleinen Abschnitt (5b) der Spulwelle (5) erstreckt, um eine Lücke (S1) zwischen dem Rohr (12) und dem im Durchmesser kleinen Abschnitt (5b) zu bilden, und der Befestiger (20) auf den im Durchmesser kleinen Abschnitt (5b) der Spulwelle (12) geschraubt ist und in die Lücke (S1) zwischen dem Rohr 12 und dem im Durchmesser kleinen Abschnitt (5b) gequetscht ist.

2. Die Angelrolle von Anspruch 1, wobei der Befestiger (20) in ein Ende der Spulwelle (5) geschraubt ist, um den Halter (10) gegen den Arretierabschnitt (11c, 51, 52) zu drücken.

## Revendications

1. Moulinet de pêche à la ligne comprenant :
un corps de moulinet (1, la) ;
un arbre de bobine (5) agencé sur le corps de moulinet (1) de manière à pouvoir être déplacé va-et-vient;
un dispositif de retenue (10) à travers lequel est inséré l'arbre de bobine (5), et qui est configuré pour supporter une bobine (4), le dispositif de retenue (10) étant monté sur l'arbre de bobine (5) de manière à ne pas pouvoir être déplacé axialement et à ne pas pouvoir tourner circonférentiellement ;
une partie de verrouillage (11c, 51, 52) configurée pour verrouiller le dispositif de retenue (10) sur l'arbre de bobine (5) ; et
une fixation (20) vissée sur l'arbre de bobine (5), la fixation (20) étant configurée pour venir en contact avec le dispositif de retenue (10) et presser le dispositif de retenue (10) contre la partie de verrouillage (11c, 51, 52),
dans lequel le dispositif de retenue (10) comprend une base (11) verrouillée sur l'arbre de bobine (5) par la partie de verrouillage (11c, 51, 52), et un tube (12) s'étendant depuis la base (11) et entourant l'arbre de bobine (5), et la fixation (20) est configurée pour avancer dans le tube (12) par vissage et pour presser la base (11) de manière à comprimer le dispositif de retenue (10) dans une direction axiale,
**caractérisé en ce que**
le tube (12) s'étend le long d'une partie de petit diamètre (5b) de l'arbre de bobine (5) pour former un espace (S1) entre le tube (12) et la partie de petit diamètre (5b), et la fixation (20) est vissée sur la partie de petit diamètre (5b) de l'arbre de bobine (5) et est comprimée dans l'espace (S1) situé entre le tube (12) et la partie de petit diamètre (5b).

2. Moulinet de pêche à la ligne selon la revendication 1, dans lequel la fixation (20) est vissée dans une extrémité de l'arbre de bobine (5) de manière à presser le dispositif de retenue (10) contre la partie de verrouillage (11c, 51, 52).
